# EUROPEAN PATENT SPECIFICATION

(11) **EP 0 573 922 B1**
(45) Date of publication and mention of the grant of the patent: **03.09.2003**
(21) Application number: 93109061.7
(22) Date of filing: 04.06.1993
(51) Int. Cl.: H04L 12/28, G06F 17/30

(54) **Network type document management system**
Netzwerk-Dokumentenverwaltungssystem
Système de gestion de documents du type réseau

(30) Priority: 09.06.1992 JP 14918592
(43) Date of publication of application: 15.12.1993
(73) Proprietor: SHARP KABUSHIKI KAISHA, Osaka-shi, Osaka-fu 545-0013 (JP)
(72) Inventor: Nishibori, Toshiki, Nara-shi, Nara-ken (JP); Kamada, Hiroshi, Yamato-Koriyama-shi, Nara-ken (JP); Yamada, Yumiko, Ikoma-gun, Nara-ken (JP); Yoshida, Minoru, Kita-Katsuragi-gun, Nara-ken (JP); Kita, Sumio, Nara-shi, Nara-ken (JP); Kitamura, Kozo, Nara-shi, Nara-ken (JP)
(74) Representative: Müller, Frithjof E., Dipl.-Ing.

(56) References cited:
- EP-A- 0 543 414
- US-A- 4 907 188
- PATENT ABSTRACTS OF JAPAN vol. 11, no. 334 (P-631) 31 October 1987 & JP-A-62 115 573 (TOSHIBA CORP.) 27 May 1987
- RESEARCH DISCLOSURE, no.326, June 1991, EMSWORTH, GB 'Distributed Image Storage and Retrieval System for a Local Area Network'
- IEEE OFFICE AUTOMATION SYMPOSIUM, 27 April 1987, GAITHERSBURG, USA pages 200 - 204 M. SATO ET AL : 'Image/Text Retrieval system on a LAN'

## Description

### BACKGROUND OF THE INVENTION

### 1. Field of the Invention

The present invention relates to a network type document management system which is configured to have an optical file, a host computer and terminals and has a function of processing an image.

### 2. Description of the Related Art

In recent days, when filing a great deal of text, the text may be treated as an electronic medium. As an electronic medium, an optical disk is used because it is portable and to be accessed at random. Such a file is referred to as an optical file. Such an optical file is now prevailing as OA equipment in behalf of various respects.

One advantage of the optical file is a possibility to retrieve data from a plurality of places including one remote place. A system having a capability of retrieving text from a plurality of places (referred to as a document management system) may be configured of an optical file for storing a plurality of materials (text) as image information, terminals located at a plurality of places for users, and a host computer for storing secondary information of the plurality of materials and retrieving a material suiting to the request from a terminal, reading the image from the optical file, and transferring the image to the requesting terminal through a public line or a LAN.

In such a system, when a certain terminal issues a request for retrieving secondary information, the host computer executes the retrieval and returns the corresponding list to the terminal. Next, the terminal issues a request for an image of a desirous material in the list to the host computer. The host computer issues a command for requesting an image to an optical file. In response to the command, the optical file operates to pull out the necessary image information from an optical disk and send out the image to the host computer. In this case, the head page and the tail page of the material need a media open and a media close respectively in addition to reading the image information. When the host computer receives the image data, the computer transfers it to the requesting terminal. The terminal operates to display the image on the display unit based on this image data.

By the way, the conventional document management system operates to transfer the material one page by one page or one material by one material, when the image of the desirous material retrieved by the terminal is transferred from the optical file to the host computer.

The transfer at one-page unit is executed to do a series of operations including a request for image data from a terminal to the host computer, a request for image data from the host computer to the optical file, a send-out of image data from the optical file to the host computer, a transfer of image data from the host computer to the terminal, a display of the image on the terminal.

In the transfer at one-material unit, a request is output for transferring image data from the host computer to the optical file in request for image data from the terminal to the host computer. The optical file operates to do the media open based on the request, read the head page, and send out it to the host computer. The host computer stores the received image data in the buffer and transfers it to the terminal. In parallel, independently of the request for the next page from the terminal, the host computer issues a request for the next page image to the optical file. The optical file passes the next page image to the host computer, based on the request and the host computer stores it in the buffer. Likewise, in receipt of the image data, the host computer stores it in the buffer and sequentially reads the image data and sends it out to the host computer. When the reading reaches the final page of the material, the optical file operates to do the media close. Independently of the operation between the optical file and the host computer, the display of the image data on the terminal is executed by sequentially transferring the image data from the buffer to the terminal on the next page request.

In the case of doing the transfer at one-page unit, the operation is executed to do the media open of the optical disk media mounted to the optical file at each page if one material is one page, fit the retrieval information to the optical disk media, pull out the necessary image information, and then do the media close. If one material includes two or more pages, only the head page and the tail page are concerned with the media open and the media close. However, the host computer waits for a request at a page unit from the terminal for accessing the optical file page by page. It needs a long time from when an indication is given to when the necessary data is displayed.

In the case of doing the transfer at the material unit, it is necessary to do a lot of buffer volume for the host computer. Further, even if just one page is viewed in the material, it is necessary to transfer all the pages as taking a long time to transfer one material. For the purpose, the host computer takes a long time to occupy the data bus. During this time, any access from another terminal is disallowed. In particular, if the material includes a lot of pages, this disability is remarkably disadvantageous.

The follwoing prior art documents disclose various types of document and image retrieval systems.

The US-A-4,907,188 describes an image information search network system which consists of image information file storing units of search stations installed at a plurality of different locations relatively distant from each other. The search stations are connected with a local area network (LAN) and can commonly receive image information from an image information bank station via the network. Each search station contains search station storing means for storing a plurality of image information files.

In the JP-A-62 115 573 a picture information retrieval system is described comprising a center station 20 and a terminal station 10 where an operator of the terminal station inputs retrieval information of a picture which is transmitted as a picture information request command to the center station 20. In the center station 20 the corresponding picture information is called out from a picture information memory device, temporarily stored in a memory and thereafter transmitted to the terminal station. In the terminal station the picture information is temporarily stored in a cache memory, extended in a compression and extension device and temporarily stored in a page memory. When an automatic mode is set, the next picture information request command is fed to the center station and the corresponding picture information is read and fed to the terminal station.

In the publication "Image/Text Retrieval system on a LAN" in the IEEE OFFICE AUTOMATION SYMPOSIUM, 27 April 1987, Gaithersburg, USA, pp. 200-204, a distributed image storage and retrieval system is described for a local area network. Connected to the local area network are a master processor, a plurality of workstations and first and second image storage devices. Along with the master processor is an inverted file index which contains the location of a plurality of image files which are stored on either the first or second image storage device. The index is queried by a user at a workstation by issuing an access request at the workstation which is transferred over the local area network to the master processor. The master processor accesses the index to obtain the location address for one or several image files which satisfy the request from the workstation. The location addresses for the image files are then transmitted over the local area network back to the workstation where the inquiry originated. The workstation then carries out the accessing of the respective storage devices to obtain the image files stored on those respective storage devices. The image files are then transferred to the workstation where the inquiry originated.

The EP-A-0 543 414, which is prior art according to Art.54(3) EPC, describes a method and apparatus for controlling rapid display of multiple images from a digital image database. The apparatus includes a database on which the digitized images are stored, a plurality of image memories for holding the digitized images for display and a display unit for displaying stored images in a sequence on different sections of the screen. Responsive to a user command to load a first image into an image memory and to display it, one or more other images adjacent to the first image in the sequence are read from the data base and held in other image memories. Thus, if a subsequent user command directs the system to display one of the adjacent images, the latency time for reading that image from the database and holding it in another image memory is reduced.

However, none of the above-cited documents disclose the features of the present invention as defined in the appended claims.

### SUMMARY OF THE INVENTION

To cope with the aforementioned disadvantage, an object of the present invention as defined by the appended claims is to provide a document management system which is capable of reducing the time ranging from when the image display is indicated to when the image is displayed, speeding up the retrieval, and reducing the time when the data bus is occupied.

According to the invention, this object is accomplished by a network type document managing system as defined in claim 1.

In the network type document management system configured as above, when the terminal issues a request for an image, the request means provided in the host computer issues a request for an image corresponding to the predetermined number of pages to the optical file. The optical file transfers the image data corresponding to the predetermined number of pages to the host computer, based on this request. The host computer stores the transferred image data in the storage means. In response to the request from the terminal, the host computer transfers the image data stored in the storage means to the terminal page by page.

This results in reducing the time from when the image display is indicated to when the image is displayed, thereby speeding up the retrieval and shortening the occupying time of the data bus.

The preferred further development as defined in claim 2 leads to making the retrieval more efficient.

Further objects and advantages of the present invention will be apparent from the following description of the preferred embodiment of the invention as illustrated in the accompanying drawings.

### BRIEF DESCRIPTION OF THE DRAWINGS

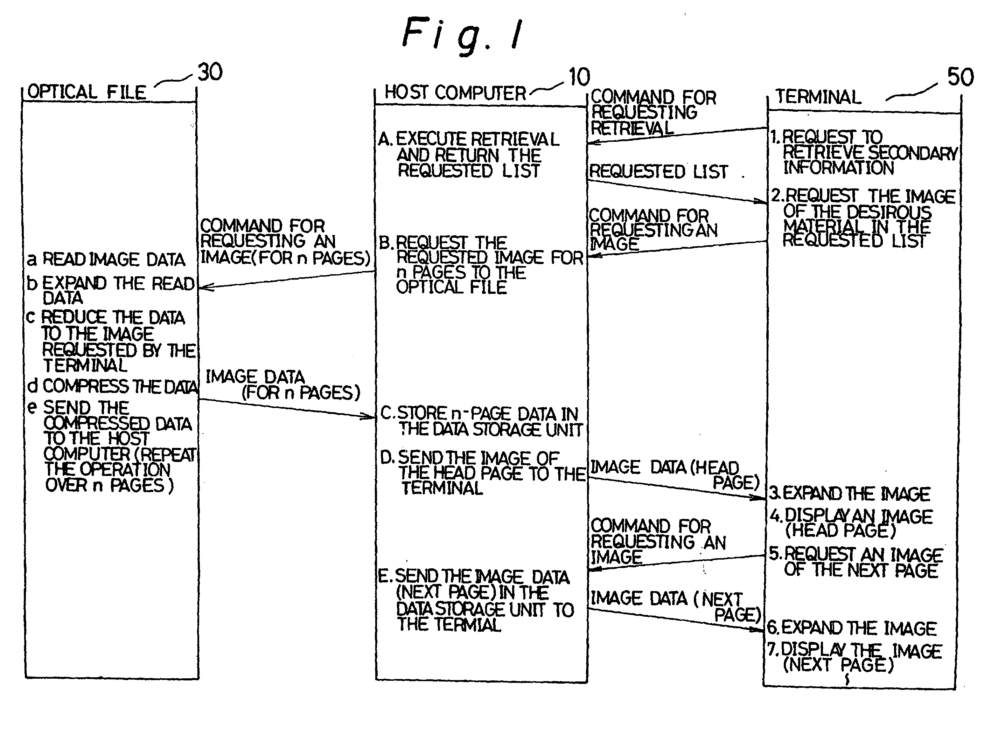

Fig. 1 is a view showing a data flow of a document management system according to an embodiment of the invention.

Fig. 2 is a block diagram showing a configuration of the document management system.

Fig. 3, composed of Fig. 3a, Fig. 3b and Fig. 3c, is a view showing comparison about a time from when the image display is indicated to when the image is displayed and the occupying time of the data bus between the document management system according to an embodiment of the invention and the conventional document management system.

### DESCRIPTION OF THE PREFERRED EMBODIMENT

Hereafter, the network type document management system according to a preferred embodiment of the invention will be discussed in detail as referring to the drawings.

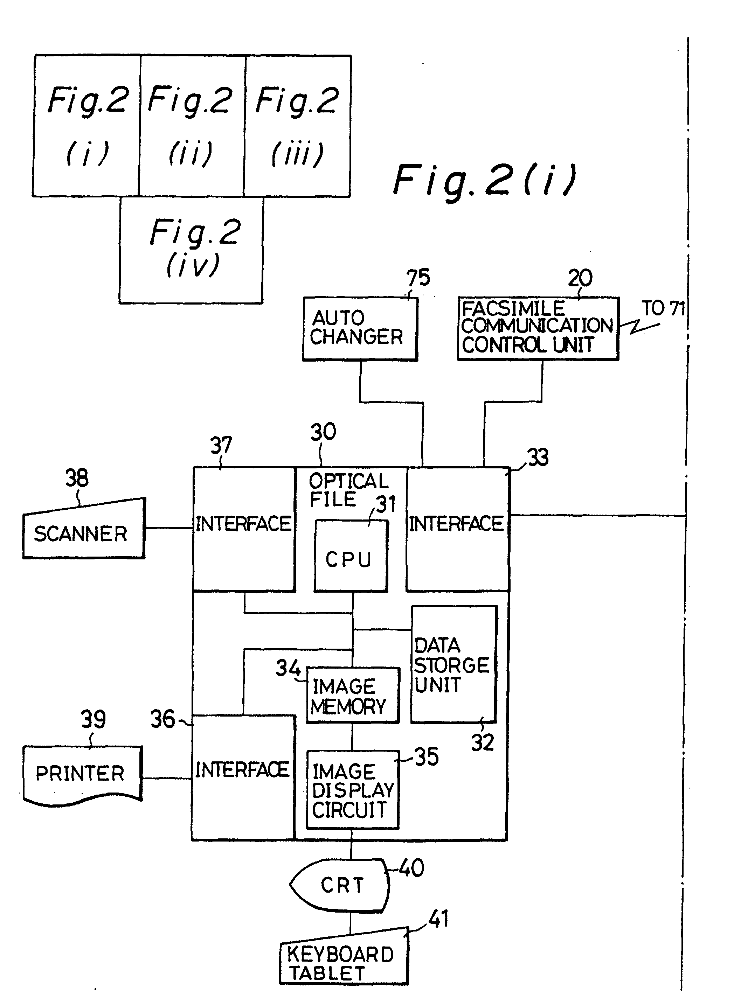

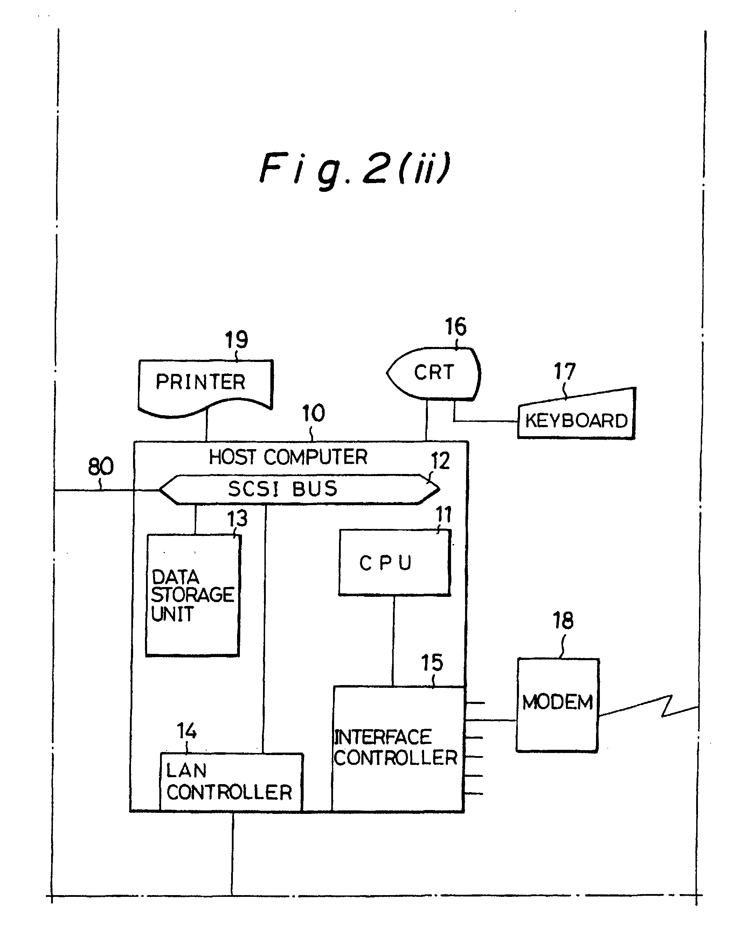

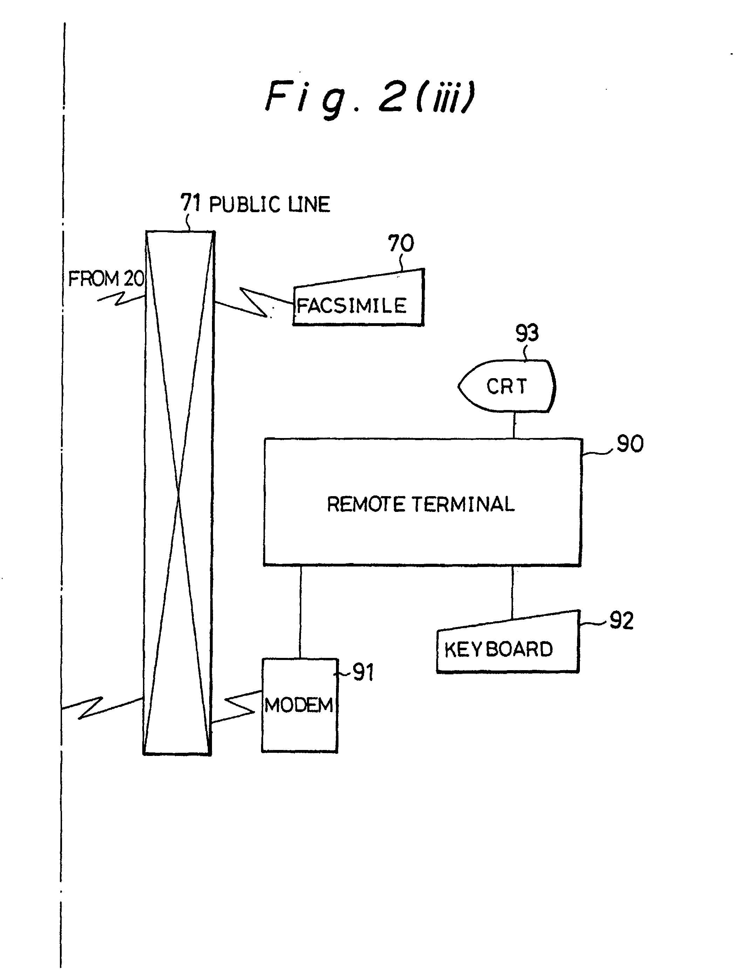

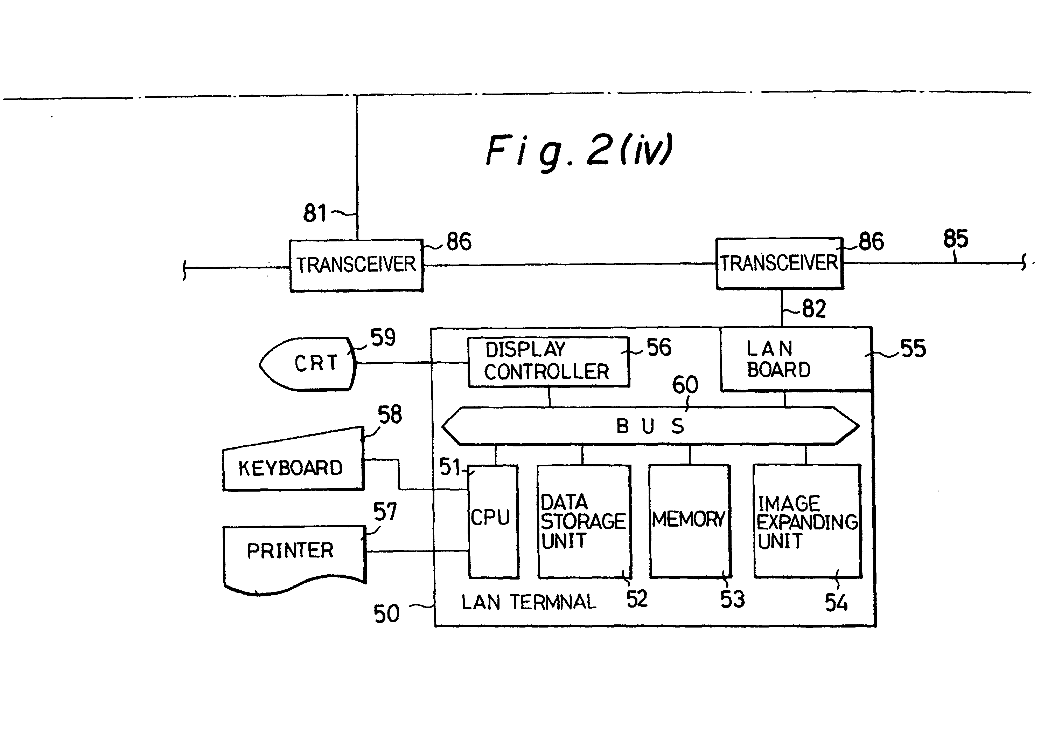

Fig. 2 is a block diagram showing an example of a network type document management system.

This document management system is configured to have a host computer 10, an optical file 30, an LAN terminal 50, and a remote terminal 90. The host computer 10 and the optical file 30 are connected through a SCSI cable 80, the host computer 10 and the remote terminal 90 are connected through a public line 71, and the host computer 10 and the LAN terminal 50 are connected through a LAN 85. In this figure, just one LAN terminal 50 and one remote terminal 90 are shown. In actual, two or more terminals may be provided.

The host computer 10 provides a CPU 11 for executing the processing and control, a SCSI bus 12 connected to the CPU 11, a data storage unit 13 for storing image data being connected to the SCSI bus 12, a LAN controller 14 for controlling data transmission through the LAN, and an interface controller 15 for connecting with a peripheral device connected to the CPU 11. According to the invention, the data storage unit 13 includes so large a volume as storing the image data corresponding to the predetermined number n of pages (n is plural). Though not shown, the host computer 10 additionally provides a secondary information storage unit for storing secondary information and a program storage unit for storing a program to be executed by the CPU 11.

To the host computer 10, there are connected a CRT 16 for displaying various kinds of information, a modem 18 for connecting with a public line 71, and a printer 19 for creating a printed output. The CRT 16 provides a keyboard 17 as an input unit. The modem 18 is connected through the interface controller 15 to the public line 71.

The optical file 30 provides a CPU 31 for executing the processing and control, a data storage unit 32 for storing various kinds of data, an interface 33 for connecting with the SCSI bus 12 of the host computer 10, an image memory 34 for storing the image data to be displayed, interfaces 36 and 37 to be connected with the peripheral device, and an image display circuit 35 connected to the image memory 34. Though not shown, the optical file 30 provides a file unit consisting of an optical disk for storing compressed image data and its driver and reader and a program storage unit for storing a program to be executed by the CPU 31.

The optical file 30 is connected to a scanner 38 as an image input unit and a printer 39 for creating a printed output through interfaces 37 and 36. The optical file 30 is connected to a CRT 40 through an image display circuit 35. The CRT 40 provides a keyboard and a tablet 41 as an input unit. The interface 33 is connected to the host computer 10 through the SCSI bus 12 and the SCSI cable 80. The interface 33 is also connected to a facsimile communication control unit 20 and an auto-changer 75 for an optical disk which operates to automatically exchange a plurality of optical disks. The facsimile communication control unit 20 is used for enabling an external facsimile as an I/O unit. The facsimile communication control unit 20 is connected to the public line 71.

The LAN terminal 50 provides a CPU 51 for executing the processing and control, a data storage unit 52, a memory 53, an image expanding unit 54 for expanding the image data, a LAN board 55 for controlling data transmission through a LAN, a display controller 56 for controlling the display, and a bus 60 connecting them with each other. The LAN terminal 50 also provides a program storage unit (not shown) for storing a program to be executed by the CPU 51.

The CPU 51 of the LAN terminal 50 is connected to a printer 57 for creating a printed output and a keyboard 58 functioning as an input unit. The display controller 56 is connected to the CRT. The LAN board 55 is connected to a transceiver 86 on the LAN through the transceiver cable 82.

The remote terminal 90 is connected to a modem 91 for connecting with a public line, a keyboard 92 functioning as an input unit, and a CRT 93. The remote terminal 90 is connected to the public line 71 through the modem 91.

The public line 71 is connected to the facsimile 70 for taking an I/O of the image information to and from the optical file 30.

The description will be oriented to the operation of the LAN terminal 50, the host computer 10, and the optical file 30 of the document management system configured as above. Each component is executed or controlled by each inclusive CPU based on a program stored in the program storage unit.

The LAN terminal 50 makes it for a user to input a request for secondary information from the keyboard 58. In response to the input, the CPU 51 is programmed to output a command for requesting retrieval onto the LAN (process 1). In response to the command for requesting retrieval, the corresponding list is input to the CPU 51 through the LAN. The CPU 51 operates to display the list on the CRT 59 through the display controller 56. Further, the user can input a request for an image from the keyboard 58. In response to the input, the CPU 51 is programmed to output a command for requesting an image on the LAN (process 2). In response to the command for requesting an image, the one-page image data is sent to the CPU through the LAN. The CPU stores it in the data storage unit 52. Then, the data is expanded in the image expanding unit 54 (process 3). The expanded image data is stored in the data storage unit 52 again. Based on the image data, one page image is displayed on the CRT through the display controller 56 (process 4). For the next page, the user can input a request for an image from the keyboard 58. The command for requesting an image is output onto the LAN (process 5). In response to the command, the sent image data is expanded (process 6). This image data is displayed (process 7).

The CPU 11 of the host computer 10 reads a command for requesting retrieval from the terminal 50 connected on the LAN 85 through the LAN controller 14 and the SCSI bus 12. In response to the command, the CPU 11 is programmed to execute the retrieval of secondary information. The executed result is output as the corresponding list data to the LAN terminal 50 through the LAN (process A). When the command for requesting an image is input from the terminal 50 to the CPU 11 through the LAN controller 14, the CPU 11 operates to output a command for requesting an image corresponding to n pages (n is plural and predetermined or arbitrarily preset by the user through the terminal) of the requested material to the optical file 30 through the SCSI cable 80 (process B). In response to the command, the image data for n pages is sent to the CPU 11 through the SCSI cable. The CPU 11 stores this data for n pages in the data storage unit 13 (process C) and sends the image of the head page to the terminal 50 through the LAN controller 14 (process D). Each time the command for requesting an image is input from the terminal 50, the CPU 11 reads the image data for the next page stored in the data storage unit 13 and sequentially sends the data to the terminal 50 (process E). After all the n pages are output to the terminal 50, if a new command for requesting an image is issued to the terminal, the CPU 11 operates to, again, output the command for requesting an image for next n pages of the requested material to the optical file 30 through the SCSI cable 80. In response to the command, the image data for the next n pages is sent to the CPU 11 through the SCSI cable 80. Then, the CPU 11 stores the data for n pages in the data storage unit 13 and sends out the image of the head page to the terminal 50 through the SCSI bus 12 and the LAN controller 14. Later, like the above, the CPU 11 serves to sequentially transmit the image data to the terminal 50.

In response to the command for requesting an image for n pages, the CPU 31 of the optical file 30 operates to execute the material file open through the SCSI cable 80 and the interface 33. The CPU 31 sequentially reads the image data at a page unit from the head page (process a), expand the image data (process b), and reduce it to the image requested by the terminal 50 (process c), compress it for transfer (process d), and send out the reduced image to the host computer 10 through the SCSI cable 80 (process e). By repeating these processes for n pages, the image data for n pages is transferred to the host computer 10. Again, if the request for an image for n pages is input from the host computer 10, the image data for the next n pages is read from the optical disk. The image data is processed as described above and then is output to the host computer. If the read data reaches the final page of the material, the file close is executed. Then, reading of the material is terminated.

The remote terminal 90 has the substantially same function as the LAN terminal 50, except that the host computer 10 is connected on the public line 71 through the modems 91 and 18.

The function of each component is as described above. Later, the series of commands and the data flow are discussed in detail.

When a request for retrieving secondary information is input to the LAN terminal 50 through the keyboard 58, the terminal 50 serves to output a command for requesting retrieval to the host computer 10 through the LAN board 55, the transceiver cable 82, and the transceiver 86. (Process 1).

The host computer 10 receives this command for requesting retrieval through the LAN 85, the transceiver 86, and the LAN controller 14 and executes the retrieval of secondary information. Then, it returns the corresponding list to the terminal 50 through the LAN controller 14, the transceiver cable 81, the transceiver 86 and the LAN 85 (Process A).

The terminal 50 accepts this list through the LAN board 55 and displays it on the CRT 59 through the display controller 56.

If the request for an image of a desirous material in the corresponding list is input to the terminal 50, the command for requesting an image is issued from the terminal 50 to the host computer 10 through the LAN board 55, the transceiver cable 82. and the transceiver 86 (Process 2).

The host computer 10 requests the image for n pages of the requested material to the optical file 30 and thus issues the command for requesting an image for n pages to the optical file 30 through the SCSI cable 80 (Process B).

In response to the command, the optical file 30 executes a media open operation, read the compressed image data of the requested material from the optical disk page by page, expand the image, reduce it to the image requested by the terminal 50, compress it, and transfer the compressed image to the host computer 10 (Processes a to e). By repeating these operations n times, the data for n pages is transferred to the host computer 10.

The host computer 10 stores the image data for n pages in the data storage unit 13 (Process C). At a time, the image data of the head page is transferred to the terminal 50 through the SCSI bus 12, the LAN controller 14, and the LAN cable 85 (Process D).

When the terminal 50 accepts the compressed image data of the head page, this image data is expanded in the image expanding unit 54 and is displayed on the CRT through the display controller 56 (Processes 3 and 4). After displaying the head page, if the user wants to view the image of the next page, by inputting the request for an image, the command for requesting an image is issued to the host computer through the LAN board 55, the transceiver cable 82, the transceiver 86, and the LAN 85 (Process 5).

The host computer 10 transfers the image data for the next page stored in the data storage unit 13 to the terminal through the LAN controller 14, the transceiver cable 81, the transceiver 86, and the 1AN 85 (Process E).

Later, the series of process 5, E, 6 and 7 are repeated until the n-th page.

If the terminal 50 requests to transfer the image of an (n+1)th page, like the above, the command for requesting an image is output from the terminal 50 to the host computer 10, the command for requesting an image for n pages is issued from the host computer 10 to the optical file 30, and the image for 2n pages from (n+1)th page to 2n-th page is transferred from the optical file 30 to the host computer 10 for implementing the storage of n-page image data from (n+1)th page to 2n-th page in the data storage unit 13 of the host computer.

When the transfer of n pages from the optical file to the host computer 10 is terminated, the data bus (SCSI bus) 12 is released. For example, another process such as access from another terminal 90 may be given to the data bus 12.

If the image for one of the n pages is requested to display, they are buffered in the data storage unit 13 of the host computer 10. Hence, no access to the optical file 30 is necessary. This leads to fast processing.

For example, if the images of an n-th page and an (n+1) th page are retrieved very frequently in a reciprocating manner, this operation is accompanied with swapping of an image to the data storage unit 13 of the host computer 10. Hence, it needs a long time. For example, the execution program of the CPU 11 may be changed in a manner to add retrieval frequency information to the secondary information and store the data for n pages in the high retrieval frequency range in the data storage unit, for making the retrieval more efficient. For example, if the retrieval frequency of the n-th page and the (n+1) th page is high, when the next image data of n pages is read out, the image information for the n-th page is left in the data storage unit, the image information for (n-1) pages from (n+1) th page to (2n-1)th page is newly read out of the optical file, the newly read image information is stored in the data storage unit with the image information for the n-th page. By these operations, if the images of the n-th page and the (n+1)th page are retrieved very frequently in a reciprocating manner, the retrieval is made more efficient. Of course, it is possible to read from the optical file the image information for n pages from the n-th page to the (2n-1)th page. In place of the retrieval frequency information, the user can selectively input an indication. The image data left in the data storage unit may be two or more pages. Those pages may be serial or non-serial. Further, it is possible to secure in the data storage unit a selective page storage area having a predetermined volume in place of the image data storage area for n pages. In this case, independently of whether or not one or more pages are selected, the image data for the next n pages is read out of the optical file.

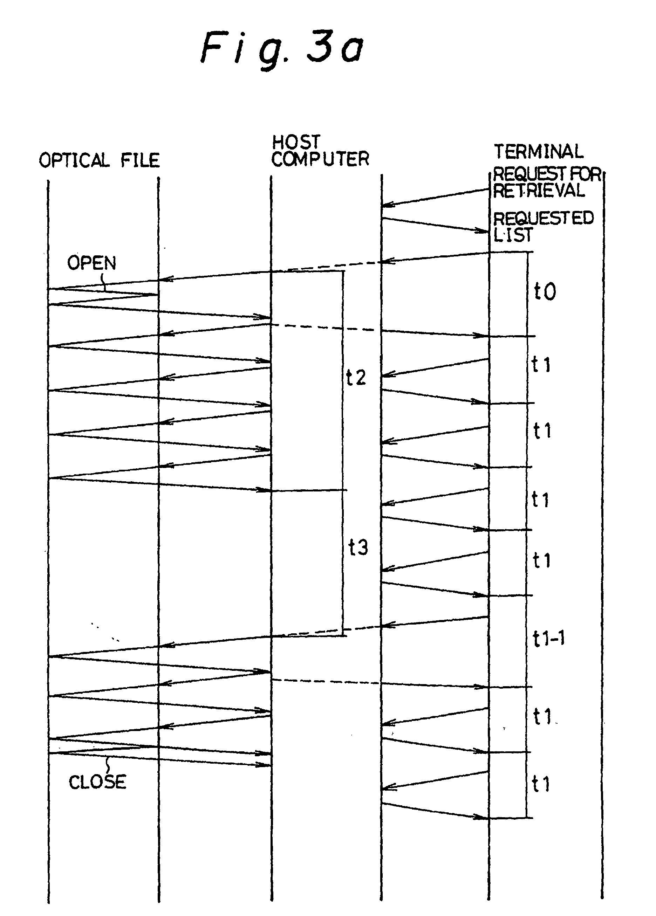

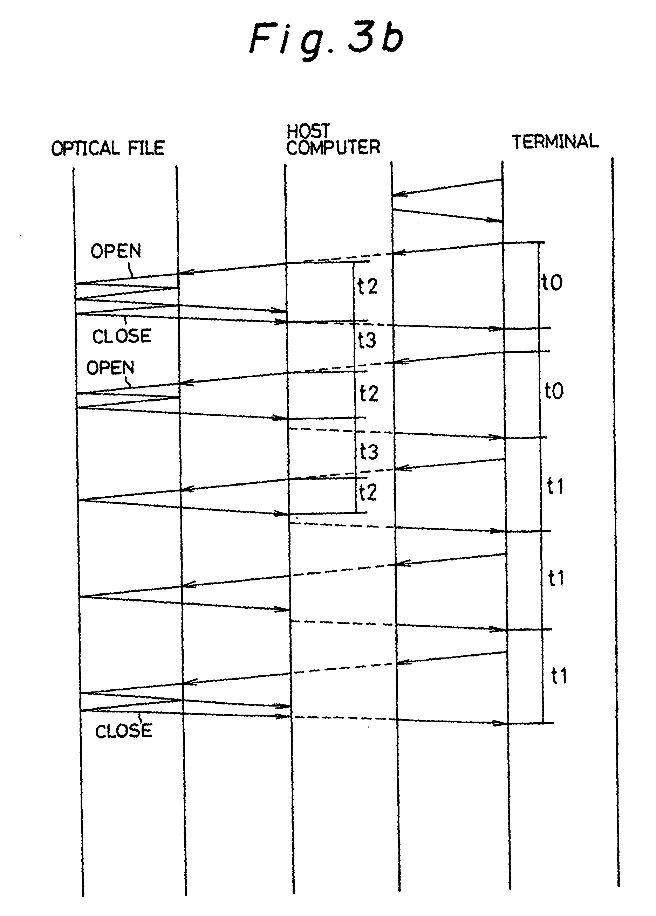

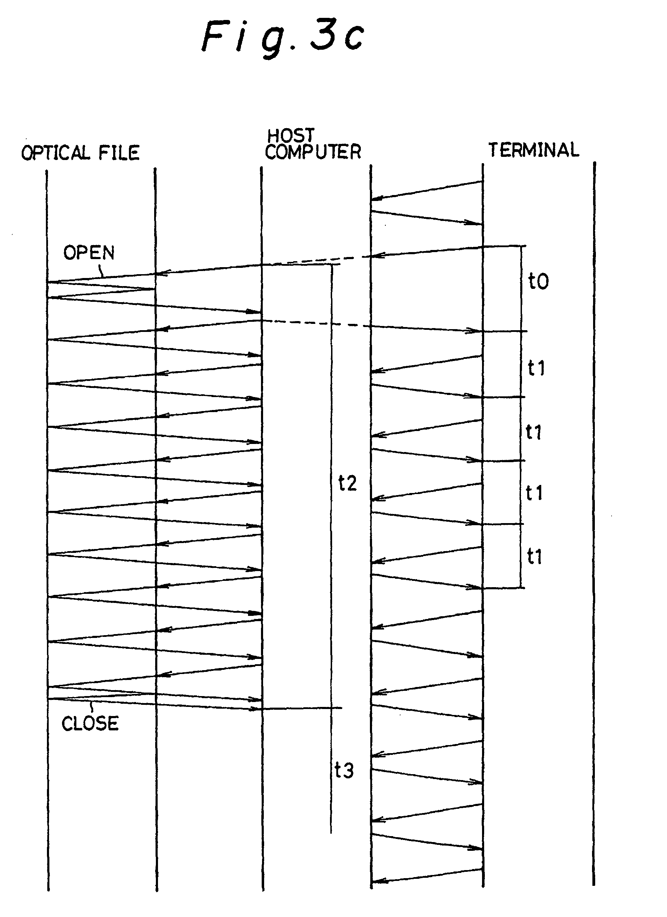

Fig. 3, composed of Figs. 3a to 3c, is a view showing a comparison about the time from when an image display is indicated to when the image is displayed and the time when the data bus is occupied between the document management system according to this embodiment and the conventional document management system.

Fig. 3b shows the transfer at one-page unit. There are executed a series of operations including a request for image data from the terminal to the host computer at a page unit, a request for image data from the host computer to the optical file, sending of image data from the optical file to the host computer, transfer of image data from the host computer to the terminal, and display of an image on the terminal. In addition, this figure includes two cases of a one-page material and a four-page material.

Fig. 3c indicates the transfer at material unit. The material consists of 10 pages. In the transfer at material unit, when the image data is requested from the terminal to the host computer, the request for transferring image data from the host computer to the optical file is output. Based on this request, the optical file operates to do the media open, read out the head page, and send it to the host computer. The host computer stores the accepted image data in the buffer and transfers it to the terminal. In parallel, independently of the request for the next page from the terminal, the request for an image of the next page is output to the optical file. Based on the request, the optical file passes the image of the next page to the host computer and the host computer stores it in the buffer. Likewise, when the image data is accepted, the host computer stores the data in the buffer and requests the next image data to the optical file. The optical file responds to it and sequentially reads out the image data and sends the data to the host computer. When the data is the final page of the material, the optical file operates to do the media close. To display the data on the terminal, independently of those operations between the optical file and the host computer, the image data is transferred from the buffer to the terminal based on the request for the next page from the terminal.

Fig. 3a shows the transfer of the image data at two or more pages unit (five page unit in this embodiment). When the request for an image is issued from the terminal to the host computer, based on this request, the optical file operates to do the media open, read the head page, and send it to the host computer. The host computer stores the accepted image data in the data storage unit and transfers it to the terminal. In parallel, independently of the request for the next page from the terminal, the request for the image of the next page is output to the optical file. Based on this request, the optical file passes the image of the next page to the host computer and the host computer stores it in the buffer. Likewise, when the image data is accepted, the host computer stores the image data in the buffer and request the next image data to the optical file. In response to the request, the optical file sequentially read out the image data and sends it out to the host computer. According to the above operations, when the host computer reads the image data for n pages (five pages in this embodiment) in the data storage unit, it stops outputting the next page request and waits for input of the request for an image of (n+1)th page (sixth page in this embodiment) from the terminal. In this respect, it is different from the transfer at the material unit. If the image of the (n+1)th page is requested from the terminal, the host computer executes reading of the image of the next n pages to the optical file. In this embodiment, since it is assumed that the material consists of eight pages, when the image data for three pages is read from the optical file, the optical file operates to do the media close. The display of the data on the terminal is executed by transferring the image data from the data storage unit to the terminal based on the request for the next page from the terminal independently of the operation between the optical file and the host computer.

From the comparison about when the image display is indicated and when the image is displayed, the time (t0) until the head page is displayed is equal in these three systems. The time (t1) until when the display of the image of the next page or later is indicated to when the image is displayed is equal in the system according to the present embodiment and the system for reading the data at a material unit, while the longer time is needed in the system for reading the data at a page unit.

From the comparison about the time (t2) when the data bus of the host computer is occupied, it is relatively longer in the system for reading the data at a material unit, while it is shorter in this system according to this embodiment. This time is equal to the sum of the occupying times in the system for transferring data at a page unit in the condition that the material includes the same number of pages. However, the system for reading the material at a page unit has a substantially short releasing time (t3) of the bus. Hence, it is difficult to do an interrupt from another terminal and the occupying time of the bus is substantially long. If an interrupt is issued from another terminal, the possibility of changing the material being read for the time being is high and the media open and the media close have to be constantly executed. Hence, the display of an image takes a long time. Further, if a desirous media is not stored in the auto changer, it is necessary to take a longer time.

As is apparent from the comparison about the time from when the image display is indicated to when the image is displayed and the comparison about the occupying time of the data bus, the document management system according to this embodiment operates to transfer image data from the optical file to the host computer at a unit of two or more pages. This results in reducing both the time from when the image display is indicated to when the image is displayed and the occupying time of the data bus, thereby speeding up the retrieval.

Further, the material selected in the condition such as a retrieval frequency is stored in the host computer. This make it possible to do retrieval more efficiently.

Many widely different embodiments of the present invention may be constructed without departing from the scope of the present invention. It should be understood that the present invention is not limited to the specific embodiments described in the specification, except as defined in the appended claims.

## Claims

1. A network type document managing system comprising:
a primary communication network (85);
an optical storage device (30) for storing a plurality of documents as image data;
a plurality of user terminals (50, 90) for requesting retrieval of materials and outputting an image of a desired document; and
a host computer (10) disposed between said optical storage device and said terminals for reading requested image data from said optical storage device according to the request from one terminal and transferring the image data to the requesting terminal,
**characterized in that**
the plurality of terminals are configured to communicate with said host computer (10) via the primary communication network (85);
the host computer (10) is configured to communicate with the optical storage device (30) via a secondary communication channel (12, 80) so as to be disposed between said optical storage device (30) and said plurality of user terminals (50, 90); and
the host computer (10) further comprises
page request means (process B) for requesting from said optical storage device (30) image data corresponding to a predetermined number of pages in response to a request issued from one of said plurality of user terminals (50, 90);
a data storage unit (13) for storing the image data received from said optical storage device (30) in response to a request from said page request means; and
page transmission means (processes D, E) for transmitting image data on a page by page basis to the corresponding user terminal which requested said data; wherein
image data transfer between the optical storage device (30) and the host computer (10) takes place via said secondary communication channel (12, 80) and image data transfer between the host computer (10) and the user terminals (50, 90) takes place via said primary communication network (85).

2. A network type document managing system according to claim 1, wherein said data storage unit (13) stores image data selected by a command for requesting an image.

3. A network type document managing system according to claim 1, wherein said terminal includes means (58, 92) operable by the user for issuing a request for retrieving secondary information, and said host computer (10) includes means for storing secondary information associated with the plurality of documents, and means for retrieving materials suiting to the request from a terminal and outputting a list of documents which at least partially match the criteria set out in the user request to the terminal (process A).

4. A network type document managing system according to claim 3, wherein said terminal includes means (53, 93) for displaying the corresponding list from said host computer, and means (58, 92) operable by the user for issuing a request for an image of a desired document in the list.

5. A network type document managing system according to claim 1, wherein said host computer (10) includes means (process B) for repeatedly issuing a request command for a predetermined number of times for the image at a unit of a single page to the optical storage device upon receiving once the image request from the terminal.

6. A network type document managing system according to claim 1, wherein said optical storage device (30) stores compressed image data and includes means (process a) for reading the compressed image data at a unit of a single page, means (process b) for expanding the compressed image data, means (process c) for reducing the image data requested by the terminal, means (process d) for compressing the reduced image data for transfer, and means (process e) for sending out the compressed image data to the host computer (10).

7. A network type document managing system according to claim 1, wherein said terminal includes means (processes 3, 6) for expanding the received image data, and means (processes 4, 7) for displaying received image data.

8. A network type document managing system according to claim 1, wherein said secondary communication channel (12, 80) comprises an SCSI interface (12) and a cable (80).

9. A network type document managing system according to claim 1, wherein said primary communication network (85) comprises a LAN (85) or a public telecommunication line (71).

## Patentansprüche

1. Netzwerk-Dokumentenverwaltungssystem mit:
- einem Primärkommunikationsnetzwerk (85);
- einem optischen Speicher (30) zum Speichern einer Vielzahl von Dokumenten als Bilddaten;
- einer Anzahl von Benutzerterminals (50, 90) zum Anfordern einer Suche nach Materialien und zum Ausgeben eines Bilds eines gewünschten Dokuments; und
- einem Hostcomputer (10), der zwischen dem optischen Speicher und den Terminals angebracht ist, um angeforderte Bilddaten aus dem optischen Speicher entsprechend der Anforderung von einem Terminal zu lesen und die Bilddaten an das anfordernde Terminal zu übertragen;
**dadurch gekennzeichnet, dass**
- die Anzahl von Terminals so konfiguriert ist, dass sie über das Primärkommunikationsnetzwerk (85) mit dem Hostcomputer (10) konfigurieren;
- der Hostcomputer (10) so konfiguriert ist, dass er über einen Sekundärkommunikationskanal (12, 80), der zwischen dem optischen Speicher (30) und den mehreren Benutzerterminals (50, 90) angeordnet ist, mit dem optischen Speicher (30) kommuniziert; und
- der Hostcomputer (10) ferner Folgendes aufweist:
-- eine Seitenanforderungseinrichtung (Prozess B) zum Anfordern von Bilddaten vom optischen Speicher (30) entsprechend einer vorbestimmten Anzahl von Seiten auf eine von einem der mehreren Benutzerterminals (50, 90) ausgegebene Anforderung hin;
-- eine Datenspeichereinheit (13) zum Speichern der vom optischen Speicher (30) auf eine Anforderung von der Seitenanforderungseinrichtung hin empfangenen Bilddaten; und
-- eine Seitenübertragungseinrichtung (Prozesse D, E) zum Übertragen von Bilddaten auf Seitenbasis an das entsprechende Benutzerterminal, das die Daten angefordert hat;
- wobei die Bilddatenübertragung zwischen dem optischen Speicher (30) und dem Hostcomputer (10) über den Sekundärkommunikationskanal (12, 80) erfolgt und die Bilddatenübertragung zwischen dem Hostcomputer (10) und den Benutzerterminals (50, 90) über das Primärkommunikationsnetzwerk (85) erfolgt.

2. Netzwerk-Dokumentenverwaltungssystem nach Anspruch 1, bei dem die Datenspeichereinheit (13) die durch einen Befehl zum Anfordern eines Bilds ausgewählten Bilddaten speichert.

3. Netzwerk-Dokumentenverwaltungssystem nach Anspruch 1, bei dem das Terminal über eine Einrichtung (58, 91) verfügt, die vom Benutzer betreibbar ist, um eine Anforderung zum Heraussuchen von Sekundärinformation auszugeben, und bei dem der Hostcomputer (10) eine Einrichtung zum Abspeichern von Sekundärinformation, die der Vielzahl von Dokumenten zugeordnet ist, und eine Einrichtung zum Heraussuchen von Materialien, die zur Anforderung passen, aus dem Terminal und zum Ausgeben einer Liste von Dokumenten, die zumindest teilweise zu den Kriterien passen, wie sie in der Benutzeranforderung dargelegt sind, an das Terminal, aufweist (Prozess A).

4. Netzwerk-Dokumentenverwaltungssystem nach Anspruch 3, bei dem das Terminal eine Einrichtung (53, 93) zum Anzeigen der entsprechenden Liste vom Hostcomputer sowie eine Einrichtung (58, 92) aufweist, die vom Benutzer betreibbar ist, um eine Anforderung für ein Bild eines gewünschten Dokuments in der Liste auszugeben.

5. Netzwerk-Dokumentenverwaltungssystem nach Anspruch 1, bei dem Hostcomputer (10) eine Einrichtung (Prozess B) zum wiederholten Ausgeben eines Anforderungsbefehls eine vorbestimmte Anzahl von Malen für das Bild mit der Einheit einer einzelnen Seite an den optischen Speicher, wenn er einmal eine Bildanforderung vom Terminal empfangen hat, aufweist.

6. Netzwerk-Dokumentenverwaltungssystem nach Anspruch 1, bei dem der optische Speicher (30) komprimierte Bilddaten speichert und er eine Einrichtung (Prozess A) zum Lesen der komprimierten Bilddaten mit der Einheit einer einzelnen Seite, eine Einrichtung (Prozess B) zum Expandieren der komprimierten Bilddaten, eine Einrichtung (Prozess C) zum Reduzieren auf die durch das Terminal angeforderten Bilddaten, eine Einrichtung (Prozess D) zum Komprimieren der reduzierten Bilddaten zur Übertragung sowie eine Einrichtung (Prozess E) zum Aussenden der komprimierten Bilddaten an den Hostcomputer (10) beinhaltet.

7. Netzwerk-Dokumentenverwaltungssystem nach Anspruch 1, bei dem das Terminal eine Einrichtung (Prozesse 3, 6) zum Expandieren der empfangenen Bilddaten sowie eine Einrichtung (Prozesse 4, 7) zum Anzeigen empfangener Bilddaten beinhaltet.

8. Netzwerk-Dokumentenverwaltungssystem nach Anspruch 1, bei dem der Sekundärkommunikationskanal (12, 80) eine SCSI-Schnittstelle (12) und ein Kabel (80) aufweist.

9. Netzwerk-Dokumentenverwaltungssystem nach Anspruch 1, bei dem das Primärkommunikationsnetzwerk (85) ein LAN (85) oder eine öffentliche Fernsprechleitung (71) aufweist.

## Revendications

1. Système de gestion de documents du type réseau, comprenant :
un réseau de communication primaire (85) ;
un dispositif de stockage optique (30) servant à stocker une multiplicité de documents sous la forme de données d'image ;
une multiplicité de terminaux d'utilisateur (50, 90) servant à demander l'extraction de données de documents et à délivrer en sortie une image d'un document souhaité ; et
un ordinateur hôte (10) disposé entre ledit dispositif de stockage optique et lesdits terminaux pour extraire les données d'image demandées dudit dispositif de stockage optique conformément à la demande en provenance d'un terminal et à transférer les données d'image au terminal demandeur,
**caractérisé en ce que**
la multiplicité de terminaux est configurée de façon à ce que les terminaux communiquent avec ledit ordinateur hôte (10) par l'intermédiaire du réseau de communication primaire (85) ;
l'ordinateur hôte (10) est configuré de façon à communiquer avec le dispositif de stockage optique (30) par l'intermédiaire d'un canal de communication secondaire (12, 80) de manière à être disposé entre ledit dispositif de stockage optique (30) et ladite multiplicité de terminaux d'utilisateur (50, 90) ; et
l'ordinateur hôte (10) comprend, en outre
des moyens de demande de page (opération B) servant à demander audit dispositif de stockage optique (30) des données d'image correspondant à un nombre prédéterminé de pages en réponse à une demande envoyée par l'un des terminaux de ladite multiplicité de terminaux d'utilisateur (50, 90);
une unité de stockage de données (13) servant à stocker les données d'image reçues dudit dispositif de stockage optique (30) en réponse à une demande en provenance desdits moyens de demande de page ; et
des moyens de transmission de page (opérations D, E) servant à transmettre des données d'image page par page au terminal d'utilisateur correspondant qui a demandé lesdites données ; dans lequel
le transfert de données d'image entre le dispositif de stockage optique (30) et l'ordinateur hôte (10) a lieu par l'intermédiaire dudit canal de communication secondaire (12, 80) et le transfert de données d'image entre l'ordinateur hôte (10) et les terminaux d'utilisateur (50, 90) a lieu par l'intermédiaire dudit réseau de communication primaire (85).

2. Système de gestion de documents du type réseau selon la revendication 1, dans lequel ladite unité de stockage de données (13) stocke des données d'image sélectionnées par une commande de demande d'image.

3. Système de gestion de documents du type réseau selon la revendication 1, dans lequel ledit terminal comprend des moyens (58, 92) aptes à être actionnés par l'utilisateur pour envoyer une demande d'extraction d'informations secondaires, et ledit ordinateur hôte (10) comprend des moyens pour stocker des informations secondaires associées à la multiplicité de documents, et des moyens pour extraire des données de document convenant à la demande en provenance d'un terminal et pour délivrer en sortie une liste de documents qui correspondent au moins partiellement aux critères indiqués dans la demande faite par l'utilisateur au terminal (opération A).

4. Système de gestion de documents du type réseau selon la revendication 3, dans lequel ledit terminal comprend des moyens (53, 93) pour afficher la liste correspondante en provenance dudit ordinateur hôte, et des moyens (58, 92) aptes à être actionnés par l'utilisateur pour envoyer une demande d'une image d'un document voulu contenu dans la liste.

5. Système de gestion de documents du type réseau selon la revendication 1, dans lequel ledit ordinateur hôte (10) comprend des moyens (opération B) pour envoyer de façon répétée au dispositif de stockage optique, un certain nombre de fois prédéterminé, une commande de demande relative à l'image, par unité constituée d'une seule page, lorsque la demande d'image émise par le terminal a été reçue une fois.

6. Système de gestion de documents du type réseau selon la revendication 1, dans lequel ledit dispositif de stockage optique (30) stocke des données d'image compressées et comprend des moyens (opération a) pour extraire les données d'image compressées par unité constituée d'une seule page, des moyens (opération b) pour décompresser les données d'image compressées, des moyens (opération c) pour réduire les données d'image demandées par le terminal, des moyens (opération d) pour compresser les données d'image réduites en vue de leur transfert, et des moyens (opération e) pour envoyer les données d'image compressées à l'ordinateur hôte (10).

7. Système de gestion de documents du type réseau selon la revendication 1, dans lequel ledit terminal comprend des moyens (opérations 3, 6) pour décompresser les données d'image reçues, et des moyens (opérations 4, 7) pour afficher les données d'image reçues.

8. Système de gestion de documents du type réseau selon la revendication 1, dans lequel ledit canal de communication secondaire (12, 80) comprend une interface SCSI (interface pour petits systèmes informatiques) (12) et un câble (80).

9. Système de gestion de documents du type réseau selon la revendication 1, dans lequel ledit réseau de communication primaire (85) comprend un réseau LAN (réseau local) ou une ligne de télécommunication publique (71).
